# EUROPÄISCHE PATENTANMELDUNG

(11) **EP 1 522 642 A1**
(43) Veröffentlichungstag der Anmeldung: **13.04.2005**
(21) Anmeldenummer: 03022612.0
(22) Anmeldetag: 06.10.2003
(51) Int. Cl.: E04B 1/76, C03C 13/06

(54) **Dämmstoffbahnen aus einem zu einer Rolle aufgewickelten Mineralfaserfilz für den klemmenden Einbau zwischen Balken**

(71) Anmelder: SAINT-GOBAIN ISOVER G+H AG, 67059 Ludwigshafen (DE)
(72) Erfinder: Horst Keller, 69259 Wilhelmsfeld (DE); Dr. Michael Schlumm, 69198 Schriesheim (DE); Jean-Luc Bernard, 60600 Giencourt Breuil Le Vert (FR)
(74) Vertreter: GROSSE BOCKHORNI SCHUMACHER

(57) **Zusammenfassung**

Bei einer Dämmstoffbahn aus mit einem Bindemittel gebundenen, biolöslichen Mineralfasern in der Form eines zu einer Rolle aufgewickelten Mineralfaserfilzes, weist die Zusammensetzung der Mineralfasern ein Alkali/Erdalkali Massenverhältnis von < 1 auf und ist die Faserstruktur durch folgende Merkmale bestimmt, nämlich mittlerer Faserdurchmesser ≤ 4 µm, Rohdichte im Bereich von 8 bis 25 kg/m³ und Bindemittelanteil im Bereich von 4 % bis 5,5 Gew.-%.

## Beschreibung

Die Erfindung betrifft eine Dämmstoffbahn gemäß dem Oberbegriff des Anspruches 1.

Ein derartiger "Klemmfilz" ist beispielsweise aus der DE 36 12 857 bekannt und wird seit vielen Jahren erfolgreich insbesondere für die Dämmung zwischen Dachsparren im Steildach eingesetzt. Hierzu wird ein Glaswollefilz verwendet, dessen Fasern durch innere Zentrifugierung im Schleuderkorb-Verfahren erhalten werden, die mit einer Bindemittelmenge von etwa 6 bis 7 Gew.-% (trocken, bezogen auf die Fasermasse) gebunden sind, wobei Rohdichten bei Nenndicke derart erzeugter Dämmstoffbahnen zwischen 10 und 30 kg/m³ liegen. Für den Transport und die Lagerung wird die erzeugte Filzbahn mit einer Kompression von mittlerweile 1:5 als Rollfilz gewickelt und derart komprimiert in Folie verpackt. An der Baustelle wird dann die Folie aufgeschnitten, worauf sich der Rollfilz aufgrund seiner inneren Spannung entrollt und als ebene Dämmstoffbahn mit Plattencharakter in einer bestimmten Nenndicke vorliegt. Von dieser ausgerollten Dämmstoffbahn können nun, in der Regel unterstützt durch quer zur Längsrichtung der Dämmstoffbahn vorgesehene Markierungslinien, Platten entsprechend der lokalen Breite eines Sparrenfeldes abgeschnitten werden, die dann quer zur Produktions- und Wickelrichtung in das Sparrenfeld eingebaut werden ("Die Platte von der Rolle"). Das Abschneiden erfolgt hierbei mit einem gewissen Übermaß, so dass sich der Plattenabschnitt beim Einsetzen in das Sparrenfeld seitlich an die Sparren andrückt, was noch durch die dadurch entstehenden relativ hohen inneren Spannungen im Klemmfilz in der Form von Klemmkräften unterstützt wird, welche den Plattenabschnitt durch Reibung an der benachbarten Sparrenfläche vor dem Herausfallen sichern. Von diesem klemmenden Einbau kommt der Name "Klemmfilz".

Um eine entsprechende Klemmwirkung der von der ausgerollten Dämmstoffbahn abgeschnittenen Dämmstoffplatten zwischen den Dachsparren zu gewährleisten, ist es erforderlich, dass diese auf Übermaß zugeschnittenen Dämmstoffplatten beim Einbau zwischen den Sparren entsprechend hohe Klemmkräfte aufweisen. Hierzu werden diese Klemmfilze auf eine hohe Steifigkeit ausgelegt, welche dadurch erreicht wird, dass diese Glaswollefilze mit einem relativ hohen Bindemittelgehalt hergestellt werden, der zwischen etwa 6 und 7 Gew.-% beträgt. Durch diesen hohen Bindemittelgehalt erfolgt aber andererseits ein entsprechend hoher Eintrag an Brandlast, was wiederum aus brandschutztechnischen Gründen nachteilig ist.

Obwohl derartige Klemmfilze seither in der Praxis millionenfach eingesetzt wurden, wären weitere Verbesserungen wünschenswert: So muss die Rollfilzbahn auch mit einer gewissen Überdicke produziert werden, um sicherzustellen, dass diese nach dem Entrollen tatsächlich wenigstens ihre für den Einbau der Klemmfilzplatten erforderliche Nenndicke erreicht. Dabei ist zu beachten, dass das Öffnen der Rolle nicht unmittelbar nach dem Verpacken erfolgt, sondern nach einer Lagerungszeit beim Hersteller, beim Handel oder beim Verbraucher von Wochen oder Monaten. In dieser Zeit kann die innere Spannung des Materials infolge von alterungsbedingten Materialänderungen allmählich nachlassen, so dass die Dämmstoffbahn für den Klemmfilz beim Entrollen ihre ursprüngliche Dicke nicht wie gewünscht zurückgewinnt, als wenn die Rolle unmittelbar nach der Fertigung wieder geöffnet werden würde. Diese mit der Zeit mögliche verminderte Rückfederung wird durch eine Überdicke bei der Produktion berücksichtigt. Diese Überdicke, die neben Alterungserscheinungen auch ein teilweises Brechen von Fasern beim Wickelvorgang infolge des Kompressionsvorgangs mitberücksichtigt, ist durchaus nicht unwesentlich. So kann ein Klemmfilz mit der Nenndicke von 160 mm eine Produktion in einer Dicke von 200 mm erfordern, um sicherzustellen, dass auch Monate später eine Rückfederung auf die Nenndicke von 160 mm mit Gewissheit erfolgt.

Es sind aber auch Klemmfilze aus Steinwolle bekannt (DE 199 104 167), wobei die Steinwolle durch das sogenannte Düsenblasverfahren oder durch äußere Zentrifugierung, etwa durch das sog. Kaskaden-Schleuderverfahren hergestellt wird. Die damit erzielten herkömmlichen Steinwollefasern bestehen hierbei aus relativ kurzen, jedoch dicken und damit vergleichsweise weniger elastischen Fasern mit einem Perlenanteil, d. h. einem Anteil an unzerfasertem Material von 10 bis 30 % der Fasermasse. Die Rohdichten dieses Materials liegen in der Praxis über 25 kg/m³, wobei der Bindemittelgehalt dieser Klemmfilze aus herkömmlicher Steinwolle gegenüber Klemmfilzen aus Glaswolle mit etwa 2 bis 3 Gew.-% relativ gering ist. Jedoch infolge der hohen Rohdichte ist allerdings absolut gesehen der Eintrag an Bindemittel vergleichbar zu dem bei Klemmfilzen aus Glaswolle. Aufgrund der relativ geringen Elastizität werden derartige Klemmfilze aus herkömmlicher Steinwolle, so sie zum Zwecke des Transports zu Rollfilzen gewickelt werden sollen, vor der Wickelstation ggf. wiederholt komprimiert und dekomprimiert, um sie so zu "elastifizieren". Mit einer solchen Elastifizierung durch Druckbeaufschlagung geht aber zwangsläufig Faserbruch einher. Dadurch und durch die nachfolgende weitere Faserbeanspruchung beim Wickeln zur Rolle ist die Rückfederung beim Entrollen zur Bildung der Klemmfilzplatte insbesondere bei hohen Kompressionsgraden nicht befriedigend und ist geringer als bei herkömmlichem Glaswollefilz.

Aufgrund der relativ hohen Rohdichte von herkömmlichem Steinwollefilz ist ein Kompressionsverhältnis von größer etwa 1:2,5 weniger praktikabel, da dann die mechanischen Eigenschaften des Produkts erheblich darunter leiden. Zudem ist mit einem solchen Verdichtungsverhältnis nur entsprechend begrenzter Platzgewinn für Lagerung und Transport erzielbar im Vergleich zu Glaswolleklemmfilzen.

Zur Erzielung der Wärmeleitfähigkeitsgruppe 035 bei Steinwollematerial ist eine Rohdichte von ca. 40 bis 45 kg/m³ erforderlich, während die gleiche Wärmeleitfähigkeitsgruppe bei einem Glaswollematerial bereits bei einer Rohdichte von unter 20 kg/m³ erreicht wird. Zur Erzielung desselben Wärmedurchlasswiderstandes ist somit eine Klemmfilzplatte aus herkömmlichem Steinwollefilz mindestens doppelt so schwer wie eine solche aus herkömmlichem Glaswollefilz, was sich beim Klemmverhalten aufgrund des höheren Eigengewichtes des Steinwollefilzes negativ bemerkbar macht.

Ein charakteristisches Unterscheidungsmerkmal zwischen Glas- und Steinwolle als Untergruppen der Gattung Mineralwolle besteht im Alkali/Erdalkali-Massenverhältnis der Zusammensetzung, welches bei Steinwolle < 1 und bei Glaswolle > 1 ist. Typische herkömmliche Steinwolle hat einen hohen Anteil CaO + MgO von 20 bis 30 Gew.-% und einen relativ niedrigen Anteil von Na₂O und K₂O von etwa 5 Gew.-%. Typische herkömmliche Glaswolle hat hingegen Erdalkalibestandteile von etwa 10 Gew.-% und Alkalibestandteile von über 15 Gew.-%. Diese Zahlen gelten insbesondere für nicht-biopersistente, also biolösliche Zusammensetzungen.

Aufgabe der Erfindung ist es, eine Mineralfaserplatte von der Rolle zum klemmenden Einbau zwischen Balken wie Dachsparren zu schaffen, die gegenüber vergleichbaren Mineralfaserplatten aus dem Stand der Technik zum klemmenden Einbau zwischen Balken eine niedrigere Brandlast aufweist, d. h. geringeren absoluten Bindemittelgehalt, ohne dass die Anforderungen an den vorbeugenden Brandschutz und an das Klemmverhalten sowie die Verarbeitung, insbesondere die Haptik darunter leiden, wobei gleichzeitig die bei der Produktion des aufzurollenden Mineralwollefilzes erforderliche Überdicke absolut gesehen reduziert werden soll.

Diese Aufgabe wird erfindungsgemäß durch die im kennzeichnenden Teil des Anspruches 1 enthaltenen Merkmale gelöst, wobei zweckmäßige Weiterbildungen durch die in den Unteransprüchen enthaltenen Merkmale gekennzeichnet sind.

Die Erfindung zeichnet sich durch ein Alkali/Erdalkali-Massenverhältnis der Mineralfasern von < 1 und eine fein ausgelegte Faserstruktur des Dämmelements aus, die durch die Faktoren mittlerer geometrischer Faserdurchmesser ≤ 4 µm, Rohdichte im Bereich von 8 bis 25 kg/m³ sowie einen Bindemittelanteil im Bereich von 4 % bis 5,5 Gew.%, bezogen auf die Fasermasse der Dämmstoffbahn bestimmt ist. Aufgrund des gewählten Alkali/Erdalkali-Massenverhältnisses von < 1 weisen die Fasern eine hohe Temperaturbeständigkeit ähnlich herkömmlicher Steinwollefasern auf. Die feine Faserstruktur ist im wesentlichen dadurch bedingt, dass Fasern mit einem mittleren geometrischen Faserdurchmesser ≤ 4 µm verwendet werden. Eine solche Faserstruktur lässt sich mit Glaswolle zwar auch erreichen, die jedoch im Vergleich zu Steinwolle wesentlich weniger temperaturbeständig ist. Der Bereich des mittleren geometrischen Durchmessers von herkömmlichen Steinwollefasem liegt üblicherweise größer 4 bis 12 µm, so dass die Fasern relativ grob ausgebildet sind. Infolge der erfindungsgemäßen Auslegung ergibt sich für ein Mineralfasergebilde bei gleicher Rohdichte wie herkömmliche Steinwolle eine weit größere Anzahl von Fasern innerhalb des Gebildes und damit eine erhöhte Anzahl von Kreuzungspunkten der Fasern. Deswegen kann diese Struktur auf geringere Rohdichte eingestellt werden, wobei der Rohdichtebereich erfindungsgemäß im Bereich von 8 bis 25 kg/m³ für den angestrebten Einsatz des Klemmfilzes beträgt. Gleichwohl zeichnet sich das Dämmelement durch ein gutes Dämmvermögen aus.

Ferner kann aber auch der Eintrag eines vorzugsweise organischen Bindemittels bei dem erfindungsgemäßen Produkt gegenüber Glaswolle abgesenkt werden, nämlich auf einen Bereich von 4 Gew.-% bis 5,5 Gew.-%, vorzugsweise auf einen Bereich von 4,5 Gew.-% bis 5 Gew.-%, wodurch die eingetragene Brandlast reduziert wird, ohne dass dadurch das Klemmverhalten negativ beeinflusst wird. Schließlich ist infolge der fein ausgelegten Faserstruktur und der geringeren Brandlast die aus der Rolle abgetrennte Mineralfaserplatte dennoch genügend steif für den klemmtechnischen Einsatz zwischen Balken bzw. Sparren. Infolge der fein ausgelegten Faserstruktur gegenüber herkömmlicher Steinwolle erhöht sich der für die Dämmwirkung wesentliche Luftanteil innerhalb des Klemmfilzes, was zu einer entsprechenden Erhöhung des Dämmeffektes führt.

Im Vergleich zu herkömmlicher Steinwolle resultiert aus dem höheren relativen Bindemittelgehalt eine steifere Auslegung des Klemmfilzes, wobei jedoch wegen der erheblich größeren Rohdichte der herkömmlichen Steinwolle insgesamt die eingetragene absolute Brandlast wesentlich reduziert wird. Analog reduziert sich auch die Brandlast im Vergleich zu herkömmlichen Klemmfilzen aus Glaswolle.

Wie bereits eingangs dargelegt, zeichnen sich die erfindungsgemäßen Fasern infolge des Alkali/Erdalkali-Masseverhältnis < 1 durch hohe Temperaturbeständigkeit aus und entsprechen dadurch den Eigenschaften herkömmlicher Steinwolle. Aufgrund der jedoch feineren Faserstruktur und vergleichsweise geringeren Rohdichte ergibt sich für das erfindungsgemäße Gebilde ein weit elastischeres Verhalten. Gegenüber herkömmlicher Steinwolle braucht die Dämmstoffbahn somit vor dem Wickelvorgang nicht speziell behandelt, etwa gewalkt zu werden, so dass das bei herkömmlicher Steinwolle erforderliche Komprimieren und Dekomprimieren zur Elastifizierung des Gebildes nicht erforderlich ist. Zweckmäßigerweise wird der Mineralwollefilz während dem Wickeln zu einer Rolle in einem Verdichtungsverhältnis von 1:3 bis 1:8, vorzugsweise von 1:4 bis 1:6 komprimiert. Gleichwohl zeichnet sich der erfindungsgemäße Klemmfilz durch ein hervorragendes Rückfederungsverhalten aus, so dass die erfindungsgemäße Dämmstoffbahn vorteilhaft mit einer vergleichsweise geringeren Überdicke produziert werden kann, als es bei herkömmlichen Produkten der Fall ist. Dieses Rückfederungsverhalten bleibt aber auch nach längeren Lagerzeiten eines gewickelten Rollfilzes erhalten, so dass die Dämmstoffbahn bei Gebrauch wieder vorteilhaft auf ihre Nenndicke zurückfedert, was auch für die dämmtechnischen Eigenschaften wesentlich ist.

Die Reduzierung der erforderlichen Überdicke aufgrund des verbesserten Rückfederungsverhaltens wirkt sich bei einer vorhandenen, unveränderten Produktionsanlage dahingehend vorteilhaft aus, dass mit dieser auch bisher nicht herstellbare Nenndicken jetzt ohne zusätzliche Investitionskosten hergestellt werden können, da sich die maximale Gesamtdicke des produzierten Filzes aus Nenndicke und Überdicke zusammensetzt.

Weiterhin kann in vorteilhafter Weise aufgrund der Reduzierung der erforderlichen Überdicke die Betriebssicherheit der Produktion erhöht werden. Der begrenzende Parameter ist eine anlagentechnisch durch den Aushärteofen vorgegebene minimale Rohdichte, welche sich durch die beginnende Ausbildung von Inhomogenitäten im Vlies durch die Durchströmung mit Heißluft beim Aushärtevorgang definiert ist. Wegen der geringeren erforderlichen Überdicke bei gleicher eingebrachter Fasermasse liegt diese in einen kleineren Volumen vor, woraus sich eine höhere Rohdichte im Aushärteofen ergibt, d.h. die Reduzierung der Überdicke erhöht den "Sicherheitsabstand". Dies ermöglicht es unter Ausnutzung des so gewonnenen "Sicherheitsabstandes", dass die Produktrohdichte weiter minimiert werden kann, was wiederum zu einem leichteren Produkt führt, welches ermüdungsfreier verarbeitet (Stichwort: kürzere Verlegezeiten) und transportiert werden kann.

Hinzu kommt, dass im Vergleich zu herkömmlicher Steinwolle beim Einbau weitere Vorteile für das erfindungsgemäße Produkt vorliegen. So ergibt sich beim Einbau zwischen den Dachsparren eine verbesserte Rückfederung in "seitlicher" Richtung deshalb, weil die meisten Fasern parallel zu den Großflächen des Produkts ausgerichtet sind, und überdies in dieser Richtung, welche beim Wickelvorgang radial zum Wickelkern liegt, praktisch keine Fasern durch den Wickelvorgang selbst nachteilig in Mitleidenschaft gezogen werden. Der Klemmfilz ist also in dieser seitlichen Richtung ganz erheblich steifer als etwa in seiner "dicken" Richtung. Es hat sich nun gezeigt, dass diese seitliche Klemmkraft beim Einbau im Falle des erfindungsgemäßen Produktes mit der Zeit nicht merklich nachlässt, was offensichtlich auf die verbesserten Elastizitätseigenschaften des erfindungsgemäßen Produkts auch unter Alterungseinflüssen zurückzuführen ist.

Für praxisgerechte Ausführungsformen wird vorteilhaft mit einer Rohdichte im Bereich von 8 bis 14 kg/m³, vorzugsweise 11 bis 14 kg/m³ insbesondere etwa 13 kg/m³ gearbeitet, wobei mit solchen Rohdichten eine Wärmeleitfähigkeit entsprechend der Wärmeleitfähigkeitsgruppe 040 gemäß DIN 18165 oder dergl. erzielt wird. Bei Einstellung auf eine Wärmeleitfähigkeit entsprechend der Wärmeleitfähigkeitsgruppe 035 gemäß DIN 18165 oder dergl., ist eine Rohdichte von 18 bis 25 kg/m³, vorzugsweise von 19 bis 24 kg/m³, insbesondere von etwa 23 kg/m³ erforderlich.

Mit dem erfindungsgemäßen Klemmfilz ist es auch möglich, Brandschutzkonstruktionen mindestens einer Feuerwiderstandsklasse EI 30 gemäß EN 13501 zu erreichen, bei denen der Klemmfilz zwischen Balken wie Dachsparren ohne eine zusätzliche Innenraumverkleidung angeordnet ist.

Die Mineralfasern für die erfindungsgemäße Dämmstoffbahn lassen sich insbesondere durch eine innere Zentrifugierung im Schleuderkorb-Verfahren mit einer Temperatur am Schleuderkorb von mindestens 1.100 °C herstellen, wodurch Fasern mit feinem Faserdurchmesser im angegebenen Bereich erzielt werden. Mit innerer Zentrifugierung im Schleuderkorb-Verfahren hergestellte Mineralwollefasern sind aus der EP 0 551 476, der EP 0 583 792, der WO 94/04468 sowie der US 6,284,684 bekannt, auf die wegen weiter Einzelheiten insoweit ausdrücklich Bezug genommen wird.

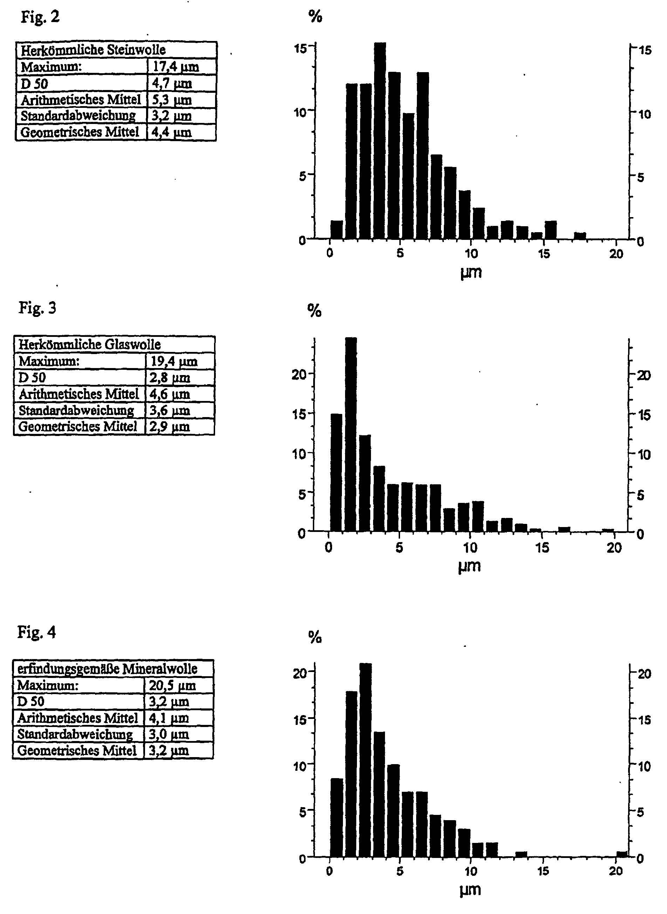

Der für die Faserfeinheit verantwortliche geringe mittlere geometrischen Durchmesser bestimmt sich aus der Häufigkeitsverteilung des Durchmessers der Fasern. Die Häufigkeitsverteilung lässt sich anhand einer Wolleprobe unter dem Mikroskop ermitteln. Es wird der Durchmesser einer großen Anzahl von Fasern ausgemessen und aufgetragen, wobei sich eine linksschiefe Verteilung ergibt (vgl. Fig. 2, 3 und 4).

Mit Blickpunkt auf die Temperaturbeständigkeit ist es dabei zweckmäßig, dass das Dämmelement einen Schmelzpunkt nach DIN 4102, Teil 17 von ≥1.000 °C aufweist.

Vorteilhaft sind die Klemmfilze aus in einem physiologischen Milieu löslichen Mineralfasern gebildet, wobei diese gemäß den Anforderungen der europäischen Richtlinie 97/69/EG und/oder den Anforderungen der deutschen Gefahrstoffverordnung Abs. IV Nr. 22 entsprechen, wodurch eine gesundheitliche Unbedenklichkeit der Klemmfilze bei Herstellung, Verarbeitung, Nutzung und Entsorgung gewährleistet ist.

Nachfolgend ist in einer Tabelle 1 die bevorzugte Zusammensetzung der Mineralfasern eines erfindungsgemäßen Klemmfilzes bereichsweise in Gew.-% angegeben.

**Tabelle 1**

| | | | |
|---|---|---|---|
| SiO₂ | 39 - 55 % | vorzugsweise | 40 - 52 % |
| Al₂O₃ | 16 - 27 % | vorzugsweise | 16 - 26 % |
| CaO | 9,5 - 20 % | vorzugsweise | 10 - 18 % |
| MgO | 1 - 5 % | vorzugsweise | 1 - 4,9 % |
| Na₂O | 0 - 15 % | vorzugsweise | 2 - 12 % |
| K₂O | 0 - 15 % | vorzugsweise | 2 - 12 % |
| R₂O (Na₂O + K₂O) | 10 - 14,7 % | vorzugsweise | 10 - 13,5 % |
| P₂O₅ | 0 - 3 % | insbesondere | 0 - 2 % |
| Fe₂O₃ (Eisen gesamt) | 1,5-15 % | insbesondere | 3,2 - 8 % |
| B₂O₃ | 0 - 2 % | vorzugsweise | 0 - 1 % |
| TiO₂ | 0 - 2 % | vorzugsweise | 0,4 - 1 % |
| Sonstiges | 0 - 2,0 % | | |

Die Erfindung kombiniert somit die Vorteile von Glaswolle hinsichtlich Dämmvermögen und Kompression mit denen von Steinwolle hinsichtlich Temperaturbeständigkeit und zeichnet sich auch durch einen ausgezeichneten vorbeugenden Brandschutz aus. Gegenüber Steinwolle kommt aber auch noch eine wesentliche Gewichtseinsparung zum Tragen, was sich indirekt wiederum auf den klemmtechnischen Einbau auswirkt, da die erfmdungsgemäßen Klemmfilze praktisch frei von nicht an der Dämmwirkung teilhabenden Perlen sind, wodurch die klemmtechnisch aufzufangende Eigenlast des Klemmfilzes geringer ist. Zusätzlich verbessert sich die Haptik des Produktes aufgrund der feineren Faserstruktur und dem Fehlen von Perlen, wobei es sich bei den Perlen um nicht zerfaserte Bestandteile handelt, welche neben der gröberen Faser für die Haptik von herkömmlicher Steinwolle maßgeblich verantwortlich sind und zu einem höheren Verstaubungsverhalten beitragen können. Schließlich kann aufgrund des elastischen Verhaltens der erfindungsgemäßen Dämmstoffbahn der Mineralwollefilz mit einer vergleichsweise geringeren Überdicke produziert werden.

Nachfolgend wird die Erfindung anhand der Zeichnung näher beschrieben und erläutert. Darin zeigen
- Fig. 1: in perspektivischer Darstellung eine Rolle aus Mineralfasern mit ausgerolltem Endabschnitt ,
- Fig. 2: ein typisches Faserhistogramm einer herkömmlichen Steinwolle,
- Fig. 3: ein typisches Faserhistogramm einer herkömmlichen Glaswolle, und
- Fig. 4: ein typisches Faserhistogramm der erfindungsgemäßen Mineralwolle.

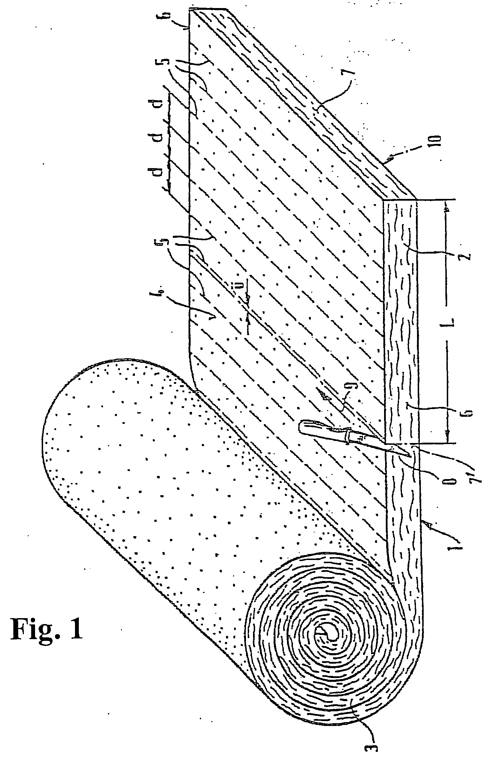

Die in Fig. 1 dargestellte Dämmstoffbahn 1 aus Mineralfasern ist zum Teil entrollt, wobei der entrollte vordere Endabschnitt mit 2 bezeichnet ist. Im dargestellten Ausführungsbeispiel weist die Dämmstoffbahn eine Rohdichte von 13 kg/m³ auf. Der mittlere geometrische Faserdurchmesser beträgt 3,2 µm und der Bindemittelanteil liegt bei 4,5 Gew.-% bezogen auf die Fasermasse der Dämmstoffbahn. Die dargestellte Dämmstoffbahn ist unkaschiert und aus Mineralfasern gebildet, bei denen das Alkali/Erdalkali-Massenverhältnis < 1 beträgt. Alternativ ist auch eine kaschierte Ausführung entsprechend der EP 1 223 031 möglich, auf die ausdrücklich Bezug genommen wird.

Wie dem teilweise vom Wickel 3 der Rolle ausgerollten vorderen Endabschnitt 2 entnommen werden kann, ist die im Wickel innenliegenden Oberfläche 4 der Dämmstoffbahn mit modularen Markierungslinien 5 versehen, die quer zur Längsrichtung der Dämmstoffbahn angeordnet und in gleichmäßigem Abstand d zueinander auf der Oberfläche der Dämmstoffbahn angeordnet sind. Diese Markierungslinien, die in unterschiedlicher Art und Weise auf der Dämmstoffbahn angeordnet sein können, sind durch optisch wirksame Linien gebildet, welche farblich von der Dämmstoffbahn abgesetzt und insbesondere durch beheizte Markierungswalzen erzeugt sind. Diese Markierungslinien 5 dienen als Schneidhilfe, so dass in einfacher Weise ein Durchschneiden der Dämmstoffbahn auf eine vorbestimmte Länge L des Endabschnitts möglich ist, wobei der Schnitt senkrecht zu den seitlichen Rändern 6 und parallel zum vorderen Rand 7 der Dämmstoffbahn 1 geführt wird, wie durch ein Messer 8 in Fig.1 angedeutet ist. Das Messer wird hierbei in Pfeilrichtung 9 durch das Material geführt, so dass ein mit einem Übermaß Ü von z.B. 2 cm bemessener Endabschnitt erzeugt wird, der als Mineralfaserplatte für den klemmtechnischen Einbau zwischen Sparren geeignet ist. Alternativ kann auch die Markierung in Form von Piktogrammen und dergl. ausgeführt werden, sofern diese als Schneidhilfe dienen können.

Im dargestellten Ausführungsbeispiel ist die Dämmstoffbahn 1 unter einer Kompression von 1:4,5 zur Rolle gewickelt. Mit der Rohdichte von 13 kg/m³ entspricht die Wärmeleitfähigkeit der Dämmstoffbahn der Wärmeleitfähigkeitsgruppe 040.

Die Zusammensetzung in Gew.-% der konventionellen, also aus herkömmlicher Steinwolle gebildeten Dämmstoffbahnen, sowie aus herkömmlicher Glaswolle gebildeten Dämmstoffbahnen und der erfindungsgemäßen Dämmstoffbahnen ergibt sich aus Tabelle 2, wobei die herkömmliche Steinwolle sowie die erfindungsgemäßen Dämmstoffbahnen einen Schmelzpunkt von mindestens 1000°C nach DIN 4102 Teil 17 aufweisen.

**Tabelle 2**

| Material | herkömmliche Steinwolle | herkömmliche Glaswolle | erfindungsgemäße Dämmstoffbahn |
|---|---|---|---|
| SiO₂ | 57,2 | 65 | 41,2 |
| Al₂O₃ | 1,7 | 1,7 | 23,7 |
| Fe₂O₃ | 4,1 | 0,4 | 5,6 |
| TiO₂ | 0,3 | | 0,7 |
| CaO | 22,8 | 7,8 | 14,4 |
| MgO | 8,5 | 2,6 | 1,5 |
| Na₂O | 4,6 | 16,4 | 5,4 |
| K₂O | 0,8 | 0,6 | 5,2 |
| B₂O₃ | | 5 | |
| P₂O₅ | | 0,15 | 0,75 |
| MnO | | 0,3 | 0,6 |
| SrO | | | 0,5 |
| BaO | | | 0,34 |
| Total | 100 | 99,95 | 99,89 |

Die Zusammensetzung zeichnet sich auch dadurch aus, dass die Fasern biolöslich sind, d. h. in einem physiologischen Milieu abgebaut werden können. Die Dämmstoffbahn mit dieser Zusammensetzung zeichnet sich durch hohe Rückstellkräfte und entsprechende Steifigkeit aus. Bei vergleichbarem Übermaß wie im Stand der Technik werden hierbei ausreichend hohe Rückstellkräfte beim Einbau zwischen Sparren unter Kompression erzielt, die auch nach längeren Einsatzzeiten einen sicheren Halt der Dämmstoffplatte zwischen Sparren gewährleisten.

Schließlich zeigen die Fig. 2 und 3 für die in der Beschreibung erwähnte herkömmliche Steinwolle und herkömmliche Glaswolle jeweils ein typisches Faserhistogramm einer Dämmstoffbahn, wobei Fig. 4 ein solches der Fasern einer erfindungsgemäßen Dämmstoffbahn angibt.

## Patentansprüche

1. Dämmstoffbahn aus mit einem Bindemittel gebundenen, in einem physiologischen Milieu löslichen Mineralfasern in der Form eines zu einer Rolle aufgewickelten Mineralfaserfilzes, der für den klemmenden Einbau von vereinzelten Dämmstoffplatten zwischen Balken, wie Dachsparren, ausgebildet ist, **dadurch gekennzeichnet, dass** die Zusammensetzung der Mineralfasern der Dämmstoffbahn ein Alkali/Erdalkali Massenverhältnis von < 1 aufweist, und dass deren Faserstruktur bestimmt ist durch einen mittleren geometrischen Faserdurchmesser 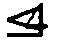 µm, eine Rohdichte im Bereich von 8 bis 25 kg/m³ und einen Anteil des Bindemittels bezogen auf die Fasermasse der Dämmstoffbahn im Bereich von 4 % bis 5,5 Gew.-%.

2. Dämmstoffbahn nach Anspruch 1, **dadurch gekennzeichnet, dass** das Bindemittel ein organisches Bindemittel ist.

3. Dämmstoffbahn nach Anspruch 1 oder 2, **dadurch gekennzeichnet, dass** der Anteil des Bindemittels bezogen auf die Fasermasse der Dämmstoffbahn im Bereich von 4,5 bis 5 Gew.-% liegt.

4. Dämmstoffbahn nach einem der vorhergehenden Ansprüche, **dadurch gekennzeichnet, dass** deren Rohdichte im Bereich von 8 bis 14 kg/m³, vorzugsweise 11 bis 14 kg/m³, insbesondere etwa 13 kg/m³, liegt, wobei die Dämmstoffbahn eine Wärmeleitfähigkeit entsprechend der Wärmeleitfähigkeitsgruppe 040 gemäß DIN 18165 oder dergl. aufweist.

5. Dämmstoffbahn nach einem der vorhergehenden Ansprüche, **dadurch gekennzeichnet, dass** deren Rohdichte im Bereich von 18 bis 25 kg/m³, vorzugsweise von 19 bis 24 kg/m³, insbesondere von etwa 23 kg/m³, liegt, wobei die Dämmstoffbahn eine Wärmeleitfähigkeit entsprechend der Wärmeleitfähigkeitsgruppe 035 gemäß DIN 18165 oder dergl. aufweist.

6. Dämmstoffbahn, eingebaut zwischen Balken wie Dachsparren ohne zusätzliche Innenraumbekleidung, nach einem der vorhergehenden Ansprüche, **dadurch gekennzeichnet, dass** diese eine Feuerwiderstandsklasse von mindestens EI 30 gemäß EN 13501 aufweist.

7. Dämmstoffbahn nach einem der vorhergehenden Ansprüche, **dadurch gekennzeichnet, dass** der Wickelvorgang des zu einer Rolle aufgewickelten Mineralfaserfilzes vorbehandlungsfrei, wie etwa walkfrei durchgeführt ist.

8. Dämmstoffbahn nach Anspruch 7, **dadurch gekennzeichnet, dass** die aufgewickelte Rolle des Mineralfaserfilzes in einem Verdichtungsverhältnis von 1:3 bis 1:8, vorzugsweise von 1:4 bis 1:6 komprimiert ist.

9. Dämmstoffbahn nach einem der vorhergehenden Ansprüche, **dadurch gekennzeichnet, dass** auf dieser Markierungen als Schneidhilfe angeordnet sind, die auf mindestens einer Oberfläche der Rolle angebracht sind.

10. Dämmstoffbahn nach einem der vorhergehenden Ansprüche, **dadurch gekennzeichnet, dass** die Mineralfasern der Dämmstoffbahn hinsichtlich ihrer Löslichkeit in einem physiologischen Milieu den Anforderungen der europäischen Richtlinie 97/69/EG und/oder den Anforderungen der deutschen Gefahrstoffverordnung Abs. IV Nr. 22 entsprechen.

11. Dämmstoffbahn nach einem der vorhergehenden Ansprüche, **dadurch gekennzeichnet, dass** die Mineralfasern des Dämmelements durch eine innere Zentrifugierung im Schleuderkorbverfahren mit einer Temperatur am Schleuderkorb von mindestens 1.100 °C hergestellt sind.

12. Dämmstoffbahn nach einem der vorhergehenden Ansprüche, **dadurch gekennzeichnet, dass** diese einen Schmelzpunkt nach DIN 4102, Teil 17 von ≥ 1.000°C aufweist.

13. Dämmstoffbahn nach einem der vorhergehenden Ansprüche, **gekennzeichnet durch** folgende Bereiche der chemischen Zusammensetzung der Mineralfasern in Gew.-%:
| | | | |
|---|---|---|---|
| SiO₂ | 39 - 55 % | vorzugsweise | 40 - 52 % |
| Al₂O₃ | 16 - 27 % | vorzugsweise | 16 - 26 % |
| CaO | 9,5 - 20 % | vorzugsweise | 10 - 18 % |
| MgO | 1 - 5 % | vorzugsweise | 1 - 4,9 % |
| Na₂O | 0 - 15 % | vorzugsweise | 2 - 12 % |
| K₂O | 0 - 15 % | vorzugsweise | 2 - 12 % |
| R₂O (Na₂O + K₂O) | 10 - 14,7 % | vorzugsweise | 10 - 13,5 % |
| P₂O₅ | 0 - 3 % | insbesondere | 0 - 2 % |
| Fe₂O₃ (Eisen gesamt) | 1,5 - 15 % | insbesondere | 3,2 - 8 % |
| B₂O₃ | 0 - 2 % | vorzugsweise | 0 - 1 % |
| TiO₂ | 0 - 2 % | vorzugsweise | 0,4 - 1 % |
| Sonstiges | 0 - 2,0 % | | |
